# EUROPEAN PATENT APPLICATION

(11) **EP 2 113 175 A1**
(43) Date of publication of application: **04.11.2009**
(21) Application number: 08380124.1
(22) Date of filing: 28.04.2008
(51) Int. Cl.: A23N 1/00, A47J 19/02, B08B 3/02

(54) **Upper citrus rind cutter for reduction of the essential oil in the juice during squeezing**

(71) Applicant: FOOD MACHINERY ESPANOLA S.A., E-46012 Valencia (ES)
(72) Inventor: Sanchez de Leon Rodriguez Roda, Juan Antonio, 46012 Valencia (ES)
(74) Representative: Canadell-Isern, Roberto

(57) **Abstract**

"Upper citrus rind cutter for reduction of the essential oil in the juice during squeezing", in which an axial opening has been made all along its length that connects to radial openings located at the bottom of the cutter and that coincide with the cutting zone, such that pressurized water enters through this axial opening and is expelled through the radial openings, cleaning the cutting zone and with the water being expelled together with the citrus fruit impurities through the lateral outlet tubes. Moreover, to change the cutter, it is not necessary to take apart the cups that hold the citrus fruit, since the cutter is secured to the cup holder by a lateral screw, fastener, pin or similar means thanks to an opening made in the cup holder that coincides with a peripheral groove which the cutter has at the top for this purpose, thus avoiding the need to disassemble the cup holder to replace the cutter

## Description

### OBJECT

The object referred to by the invention protected in this Patent consists of an "Upper citrus rind cutter for reduction of the essential oil in the juice during squeezing", which to this end enables the reduction of the essential oil present in citrus juices. In turn, it allows for easy assembly and disassembly without the need to take apart at any time the entire system of cups as was previously the case.

### BACKGROUND

The known procedure for squeezing juice from fruit, especially citrus fruits, consists of putting the fruit into a machine that performs this function. For this purpose, the fruit is channeled towards some lower cups that receive the fruit when the upper cups are at their highest point, allowing the fruit to become housed in the bottom of the lower cups. This positioning in the lower cups is achieved by means of rotating shafts that are synchronized with the position of the upper cups.

Two cutters (one upper and one lower) then make a circular incision, in a wedge or disk shape, on the upper and lower part of the fruit, respectively, to allow the juice to exit through the filter tube, located below the cups, towards a juice collector when the upper and lower cups compress the fruit.

It is in this upper cutter where the cells of essential oil present in the fruit's rind break down. This essential oil is what causes the bitterness in citrus fruits, and thus the importance of being able to reduce it to the utmost so that it does not come into contact with the juice at any time. The drawback of this system of oil reduction in citrus juices is that the water that should eliminate the oil from the rind in the cutting zone is pushed from the periphery of the fruit, and thus only a partial elimination of the essential oil is achieved.

In the state of the art, the upper cutter is related to the cup holder by twisting of the upper part of the cutter, which means that each change of cutter involves the disassembly of the cup holder that is secured to the cup holder shaft; this causes the two cups that hold the citrus fruit at the top and bottom to come apart, with the resulting loss of time during the change process.

### DESCRIPTION OF THE INVENTION

The purpose of the invention that constitutes the object of this Patent consists of the elimination of some functional and structural drawbacks inherent in the known object, and it has been designed and developed in accordance with this priority objective.

The advantage of the new embodiment is that an axial opening has been made all along the length of the upper cutter that connects to radial openings located at the bottom of the cutter and that coincide with the cutting zone, such that pressurized water enters through this axial opening and is expelled through the radial openings, cleaning the cutting zone and with the water being expelled together with the citrus fruit impurities (pulp, rind and essential oil) through the lateral outlet tubes, making it possible in each work cycle, i.e., in each cutting of a new fruit, to keep the work area completely clean for the next squeezing.

To change the cutter that is the object of the patent, it is not necessary to take apart the cups that hold the citrus fruit, since the cutter is secured to the cup holder by a lateral screw, fastener, pin or similar means thanks to an opening made in the cup holder that coincides with a peripheral groove which the cutter has at the top for this purpose, thus avoiding the need to disassemble the cup holder to replace the cutter.

### BRIEF DESCRIPTION OF THE DRAWINGS

To complement the description of the invention and to facilitate interpretation of the structural and functional characteristics of its object, drawings are attached hereto that schematically show a preferential embodiment of the upper cutter of the citrus rind that eliminates the essential oil during the extraction of juice which constitutes the object of this Patent. In these drawings:

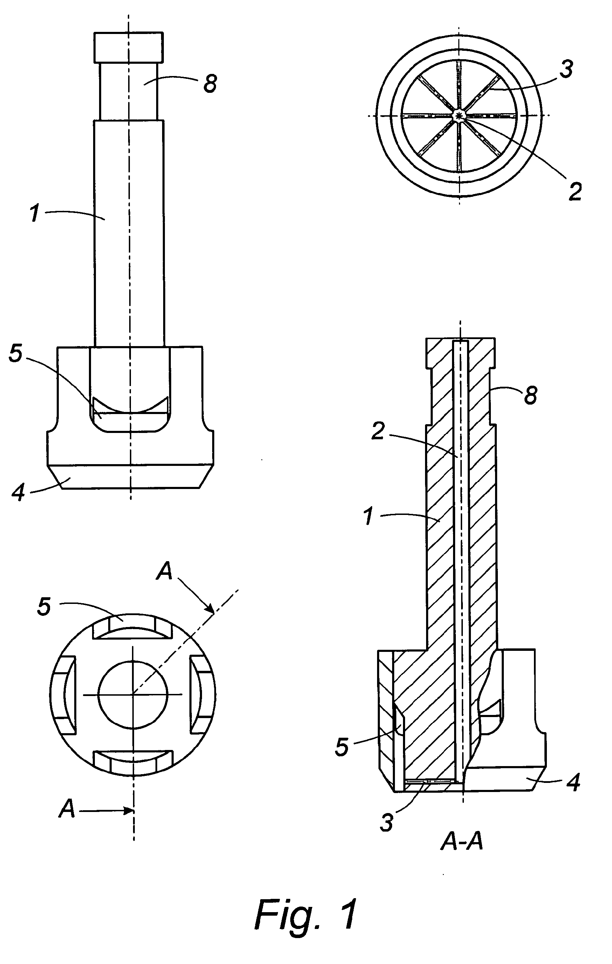

- Figure 1 shows different views of the upper citrus rind cutter.

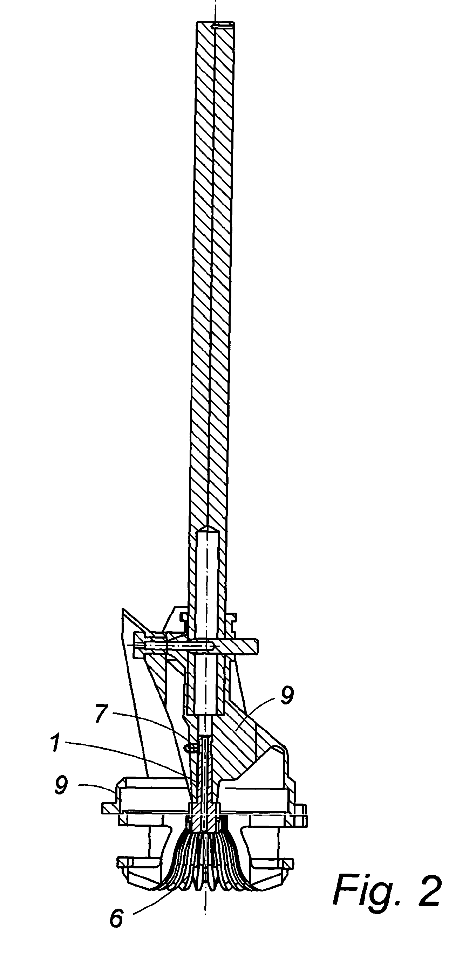

- Figure 2 shows a partial section of the assembly formed by the shaft, cutter and upper cup.

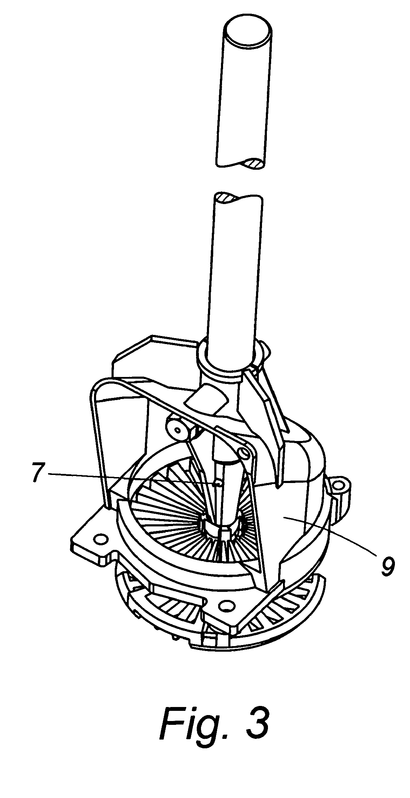

- Figure 3 shows a perspective of the above assembly.

### DESCRIPTION OF A PREFERENTIAL EMBODIMENT

To clearly show the nature and scope of the advantageous application of the upper citrus rind cutter for reduction of the essential oil in the juice during squeezing, which constitutes the object of the claimed invention, following is a description of its structure with reference to the drawings which, as they represent a preferential embodiment of this object on an informative basis, should be considered in the broadest sense of the word and not as limitative of the application and contents of the claimed invention.

To this end, an axial opening (2) has been made all along the length of the upper cutter (1) that connects to radial openings (3) located at the bottom of the cutter (1) and that coincide with the cutting zone (4), such that pressurized water enters through this axial opening (2) and is expelled through the radial openings (3), cleaning the cutting zone (4) and with the water being expelled together with the citrus fruit impurities (pulp, rind and essential oil) through the lateral outlet tubes (5), making it possible in each work cycle, i.e., in each cutting of a new fruit, to keep the work area completely clean for the next squeezing.

To change the cutter (1) that is the object of the patent, it is not necessary to take apart the cups (6) that hold the citrus fruit, since the cutter (1) is secured to the cup holder by a lateral screw (7), fastener, pin or similar means thanks to an opening made in the cup holder (9) that coincides with a peripheral groove (8) which the cutter (1) has at the top for this purpose, thus avoiding the need to disassemble the cup holder (9) to replace the cutter (1).

## Claims

1. "Upper citrus rind cutter for reduction of the essential oil in the juice during squeezing", of the kind used in machines that feed the fruit on belts that align and separate it for subsequent individualized treatment between two cups, where two cutters, one upper and one lower, make an incision to draw off the juice, **characterized in that** an axial opening (2) has been made all along the length of the upper cutter (1) that connects to radial openings (3) located at the bottom of the cutter (1) and that coincide with the cutting zone (4), such that pressurized water enters through this axial opening (2) and is expelled through the radial openings (3), cleaning the cutting zone (4) and with the water being expelled together with the citrus fruit impurities (pulp, rind and essential oil) through the lateral outlet tubes (5), making it possible in each work cycle, i.e., in each cutting of a new fruit, to keep the work area completely clean for the next squeezing.

2. " Upper citrus rind cutter for reduction of the essential oil in the juice during squeezing", as per claim 1, **characterized in that** the cutter (1) is secured to the cup holder (9) by a lateral screw (7), fastener, pin or similar means thanks to an opening made in the cup holder (9) that coincides with a peripheral groove (8) which the cutter (1) has at the top for this purpose.
